# EUROPEAN PATENT APPLICATION

(11) **EP 4 583 316 A1**
(43) Date of publication of application: **09.07.2025**
(21) Application number: 23860481.3
(22) Date of filing: 31.08.2023
(51) Int. Cl.: H01R 4/62, H01R 4/02, H01R 43/02

(54) **CONDUCTOR-BONDED STRUCTURE AND METHOD FOR ULTRASONICALLY BONDING CONDUCTORS**

(30) Priority: 31.08.2022 JP 2022138133
(71) Applicant: Furukawa Electric Co., Ltd., Tokyo 100-8322 (JP); Furukawa Automotive Systems Inc., Inukami-gun, Shiga 522-0242 (JP)
(72) Inventor: NAKAMURA, Toshihiro, Tokyo 100-8322 (JP); NAKAYAMA, Tomohiro, Inukami-gun, Shiga 522-0242 (JP); YAMADA, Takuro, Inukami-gun, Shiga 522-0242 (JP); NAKAGAWA, Ryo, Inukami-gun, Shiga 522-0242 (JP)
(74) Representative: Goddar, Heinz J.
(86) International application number: PCT/JP2023/031813
(87) International publication number: WO 2024/048719

(57) **Abstract**

Provided is a bonded structure in which conductors of a plurality of wires is ultrasonically bonded together. Conductors (5a) that are relatively difficult to deform are intermixed with conductors (5b) that are relatively easy to deform. In other words, two or more types of the wires made up of conductors of different materials are intermixed. In an axial view of the wires, when an ultrasonic bonding direction is an up-down direction of a conductor joint, and a direction orthogonal to the ultrasonic bonding direction is a width direction of the conductor joint, the conductors (5a, 5b) of different materials are arranged substantially line symmetrical with respect to a center line (A) in the width direction.

## Description

### Technical Field

The present invention relates to a conductor-bonded structure in which a plurality of wire conductors is ultrasonically bonded to each other, and a method for ultrasonically bonding conductors.

### Background Art

Wire harnesses used in automobiles and other vehicles include multiple wires bonded together. One method used to bond these wires is as follows. For example, insulation coating on multiple insulated wires is stripped off to predetermined lengths for each wire to expose the conductors, the exposed conductors are twisted together in the same direction, and the twisted portions are welded together by ultrasonically welding to connect the wires (e.g., Patent Literature 1).

### Cited Documents

### Patent Literature

Patent Literature 1: JP 2005-322544 A

### Summary of Invention

### Problem to be Solved by Invention

However, instead of only bonding conductors that are all made of the same material, there is sometimes a need to bond conductors made of different materials. In such cases, it may be difficult to ensure sufficient bonding strength.

It is an object of the present invention to provide a conductor-bonded structure and a method for ultrasonically bonding conductors capable of ultrasonically bonding conductors of different materials with high bonding strength.

### Solution to Problem

In order to achieve the object described above, a first invention is a conductor-bonded structure in which conductors of a plurality of wires are ultrasonically bonded, in which two or more types of the wires made up of conductors of different materials are intermixed, when viewed from an axial direction of the wire, an ultrasonic bonding direction is an up-down direction of a conductor joint, and a direction orthogonal to the ultrasonic bonding direction is a width direction of the conductor joint, the wires made of different materials are arranged substantially line symmetrical with respect to a center line in the width direction, and the two or more types of wires are intermixed in the width direction of the conductor joint, at least at a portion along the center line.

When viewed from the axial direction of the wire, at least one type of the wires is desirably separated across several different locations.

When viewed from the axial direction of the wire, at least one type of the wires may be separated in the up-down direction of the conductor joint.

Of the wires, a wire made up of conductors that are relatively easy to deform may be arranged between wires made up of conductors that are relatively difficult to deform.

The conductor that is relatively difficult to deform may be a conductor containing copper as a main component, and the conductor that is relatively easy to deform may be a conductor containing aluminum as a main component.

The conductor that is relatively difficult to deform may be a conductor containing relatively hard aluminum as a main component, and the conductor that is relatively easy to deform may be a conductor containing relatively soft aluminum as a main component.

When viewed from the axial direction of the wire, one type of the wires may be arranged at the center in the width direction.

According to the first invention, high bonding strength can be achieved by arranging wires made of different materials substantially line symmetrical with respect to the center line in the width direction.

In particular, higher bonding strength can be achieved by separating at least one type of the wires across several different locations (not gathering the wires into one assembly) when viewing the wires from the axial direction of the wire. For example, by separating one type of the wires in the up-down direction of the conductor joint, wires that differ in the up-down direction can be bonded with higher strength.

For example, it may be difficult to achieve high bonding strength between wires made up of conductors that are relatively difficult to deform as compared to wires made up of conductors that are relatively easy to deform. This is because the conductor surfaces do not sufficiently deform and the oxide film on the surfaces of the conductors affect the bonding strength. On the other hand, increasing the bonding energy of ultrasonic bonding can cause the mold and the conductors to adhere to each other, for example.

In contrast, by arranging conductors that are relatively easy to deform between conductors that are relatively difficult to deform, higher bonding strength can be achieved than when bonding wires made up of conductors that are relatively difficult to deform.

For example, if conductors that are relatively easy to deform are gathered together on one side and conductors that are relatively difficult to deform are gathered together on the other side and all the conductors are bonded, in the initial stage of bonding, only the conductors that are relatively easy to deform will deform and the conductors that are relatively difficult to deform will not bond. In other words, bonding progresses only on one side of the wire assembly. In contrast, by distributing the conductors that are relatively difficult to deform and the conductors that are relatively easy to deform, bonding can be progressed throughout the entire wire assembly from the initial stage of bonding. Therefore, it is possible to reduce variation in bonding strength and ensure stable strength throughout the assembly.

In particular, when creating an assembly of conductors containing aluminum as a main component and conductors containing copper as a main component, the conductors containing copper as a main component are relatively difficult to deform. Thus, the above effect can be achieved more reliably when creating an assembly of conductors containing aluminum as a main component and conductors containing copper as a main component.

The same effect can also be reliably achieved when creating an assembly of conductors containing a hard aluminum as a main component and conductors containing a soft aluminum as a main component.

A second invention is a method for ultrasonically bonding conductors of a plurality of wires together, the method using an anvil, a horn arranged opposing the anvil, and a pair of gathers opposing each other in a direction orthogonal to the direction in which the anvil and the horn oppose each other, the method including: sandwiching an assembly formed by gathering a plurality of the conductors between the anvil, the horn, and the gathers, in which, when applying vibration to the assembly in a direction substantially perpendicular to an axial direction of the wire while applying pressure, when viewed from the axial direction of the wire, the wires made of different materials are arranged substantially line symmetrical with respect to a center line in a vibration direction, and two or more types of the wires are intermixed in a direction in which the assembly is sandwiched by the pair of gathers, at least at a portion along the center line.

According to the second invention, high bonding strength can be achieved by arranging wires made of different materials substantially line symmetrical with respect to the center line in the width direction.

### Effects of the Invention

The present invention provides a conductor-bonded structure and a method for ultrasonically bonding conductors capable of ultrasonically bonding conductors of different materials with high bonding strength.

### Brief Description of Drawings

FIG. 1 is a diagram showing a bonded structure 1.
FIG. 2 is a diagram showing a method for bonding conductors 5a and 5b.
FIG. 3 is a diagram showing a state in which the conductors 5a and 5b are bonded together.
FIG. 4A is a diagram showing another arrangement of the conductors 5a and 5b.
FIG. 4B is a diagram showing another arrangement of the conductors 5a and 5b.
FIG. 4C is a diagram showing another arrangement of the conductors 5a and 5b.
FIG. 4D is a diagram showing another arrangement of the conductors 5a and 5b.
FIG. 5A is a diagram showing another arrangement of the conductors 5a and 5b.
FIG. 5B is a diagram showing another arrangement of the conductors 5a and 5b.
FIG. 5C is a diagram showing another arrangement of the conductors 5a and 5b.
FIG. 5D is a diagram showing another arrangement of the conductors 5a and 5b.
FIG. 6A is a diagram showing another arrangement of the conductors 5a and 5b.
FIG. 6B is a diagram showing another arrangement of the conductors 5a and 5b.
FIG. 6C is a diagram showing another arrangement of the conductors 5a and 5b.
FIG. 6D is a diagram showing another arrangement of the conductors 5a and 5b.
FIG. 7A is a diagram showing another arrangement of the conductors 5a and 5b.
FIG. 7B is a diagram showing another arrangement of the conductors 5a and 5b.
FIG. 7C is a diagram showing another arrangement of the conductors 5a and 5b.
FIG. 7D is a diagram showing another arrangement of the conductors 5a and 5b.
FIG. 8A is a diagram showing another arrangement of the conductors 5a and 5b.
FIG. 8B is a diagram showing another arrangement of the conductors 5a and 5b.
FIG. 8C is a diagram showing another arrangement of the conductors 5a and 5b.
FIG. 9A is a diagram showing another arrangement of the conductors 5a, 5b, and 5c.
FIG. 9B is a diagram showing another arrangement of the conductors 5a, 5b, and 5c.
FIG. 9C is a diagram showing another arrangement of the conductors 5a, 5b, and 5c.
FIG. 9D is a diagram showing another arrangement of the conductors 5a, 5b, and 5c.
FIG. 10 is a diagram showing results of bonding strength measurement.
FIG. 11 is a diagram showing results of bonding strength measurement.

### Description of Embodiments

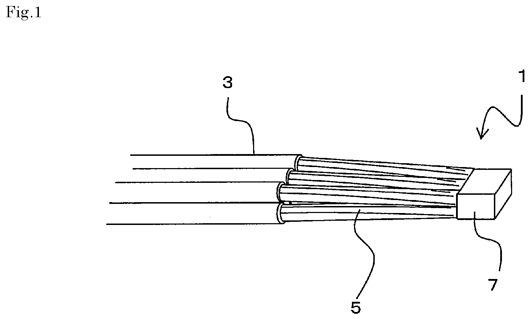

Now, embodiments of the present invention will be described with reference to the figures. FIG. 1 is a schematic diagram showing a bonded structure 1. The bonded structure 1 is a structure in which conductors 5 of a plurality of wires 3 are ultrasonically bonded to each other. In each of the wires 3, outer peripheries of the conductors 5 are covered with an insulation coating. At the end of each wire 3, the insulation coating is removed to a predetermined extent, exposing the inner conductors 5.

Each conductor 5 is made of a plurality of wires twisted together, for example. The conductor 5 may be a single wire. As will be described in detail later, the plurality of conductors 5 include conductors that are relatively difficult to deform and conductors that are relatively easy to deform. In other words, there are two or more types of wires 3 made up of conductors of different materials.

The conductors 5 in each of the plurality of wires 3 are arranged facing in the same direction. At the leading edge of the conductors 5, a conductor joint 7 is formed where the conductors 5 are ultrasonically bonded to each other. In other words, the conductors 5 are integrated at the conductor joint 7. The wires 3 do not necessarily have to all be oriented in the same direction, but it is desirable that at least some of the wires 3 are oriented in the same direction. In the figures, no wires are ahead of the conductor joint 7, but no limitation is intended.

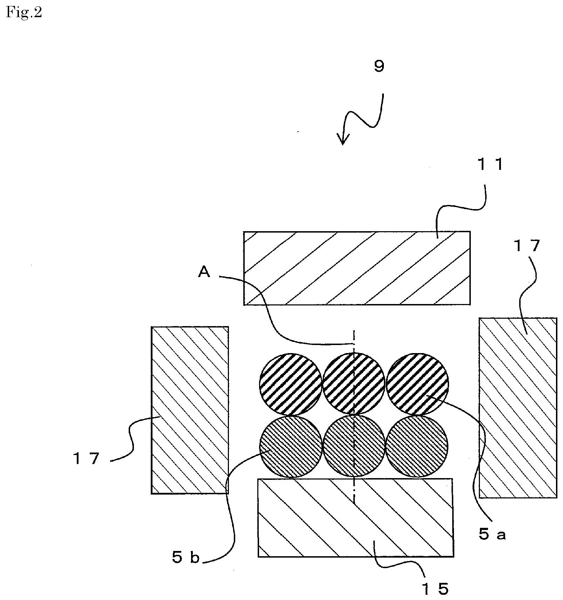

Next, a method for ultrasonically bonding the conductors 5 of the plurality of wires 3 by using an ultrasonic bonding device will be described. FIG. 2 shows an ultrasonic bonding device 9 for bonding conductors by ultrasonic bonding. The ultrasonic bonding device 9 includes an anvil 15, a horn 11 arranged opposing the anvil 15, and a pair of gathers 17 opposing each other in a direction orthogonal to the direction in which the anvil 15 and the horn 11 oppose each other. Note that, a vibration source that applies vibration to the horn 11 is omitted from the figure.

In this embodiment, the plurality of wires 3 include wires 3 made up of a conductor 5a, which is relatively difficult to deform, and wires 3 made up of a conductor 5b, which is relatively easy to deform. Examples of the material that is difficult to deform include a material with a relatively high melting point, a material with a high elastic modulus, a material with a high hardness, and a material with a high tensile strength. In other words, the material that is difficult to deform is a material with a relatively small amount of deformation when subjected to the same compressive force during ultrasonic bonding.

As the conductors 5a and 5b that have different ease of deformation, for example, the conductor 5a, which is relatively difficult to deform, is a conductor containing copper as a main component, and the conductor 5b, which is relatively easy to deform, is a conductor containing aluminum as a main component.

In a configuration where the conductors 5a and 5b are made of materials in the same material system, for example, the conductor 5a, which is relatively difficult to deform, may be a conductor made mainly of a relatively hard aluminum (such as an aluminum alloy), and the conductor 5b, which is relatively easy to deform, may be a conductor made mainly of a relatively soft aluminum (such as pure aluminum). Further, if the ease of deformation varies depending on additives or other factors, for example, the quantity of additives may be increased relative to the conductor 5a, which is relatively difficult to deform.

To perform ultrasonic bonding, first, an assembly formed by gathering the conductors 5a and 5b of the plurality of wires 3 is arranged between the anvil 15 and the horn 11, which oppose each other in the up-down direction. The gathers 17 are arranged on either side of the assembly of the conductors 5a and 5b. In other words, the assembly of the conductors 5a and 5b is sandwiched between the anvil 15 and the horn 11 in the up-down direction and sandwiched between the pair of gathers 17 in the width direction.

Viewed from the axial direction of wire 3, when an ultrasonic bonding direction is taken as the up-down direction of the conductor joint (up-down direction in FIG. 2) and a direction orthogonal to this direction is taken as the width direction of the conductor joint (right-left direction in FIG. 2), the arrangement of the conductors 5a and 5b made of different materials is substantially line symmetrical with respect to a center line A in the width direction.

The figures referred to below also include cases in which the arrangement of the conductors 5a and 5b is reversed. For example, FIG. 2 shows an example in which the conductor 5b is arranged on the anvil 15 side and the conductor 5a is arranged on the horn 11 side, but the conductor 5a may be arranged on the anvil 15 side and the conductor 5b may be arranged on the horn 11 side.

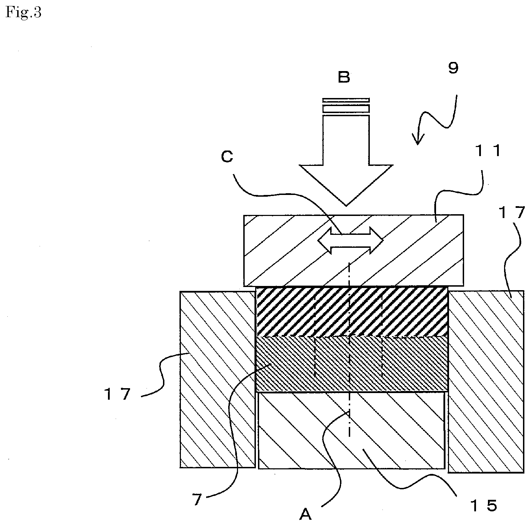

Next, as shown in FIG. 3, in a state where the width direction of the assembly is restricted by the assembly being sandwiched between the gathers 17, ultrasonic vibration is applied to the assembly by the horn 11 in a direction substantially perpendicular to the direction of pressure (direction of the arrow B in the figure) while the anvil 15 and the horn 11 sandwich the assembly in the up-down direction and apply pressure collectively (direction of the arrow B in the figure). In other words, the ultrasonic vibration direction is the width direction of the assembly (direction of the arrow C in the figure) or the axial direction of the wires. Therefore, when viewed from the axial direction of the wires 3, the arrangement of the wires 3, which are made of different materials, is substantially line symmetrical with respect to the center line A in the vibration direction. With this configuration, it is possible to form a conductor joint 7 in which the plurality of conductors 5a and 5b are assembled and bonded together. Since the surface pattern of the horn 11 is transferred to the upper surface of the conductor joint 7, the up-down direction and the left-right direction of the conductor joint 7 are specified.

In the illustrated example, the top surface of the anvil 15 is flat but may be formed with a round shape on both sides. That is, at the conductor joint 7, a portion corresponding to the corner between the gather 17 and the anvil 15 may be formed with a round shape. Similarly, the bottom surface of the anvil 15 on the horn side is flat but may also be formed with a round shape on both sides.

According to this embodiment, when the plurality of conductors 5a and 5b are assembled to form the conductor joint 7, high bonding strength can be achieved by arranging the conductor 5a, which is relatively difficult to deform, and the conductor 5b, which is relatively easy to deform, so that they are symmetrical with respect to the center line A in the width direction (ultrasonic vibration direction).

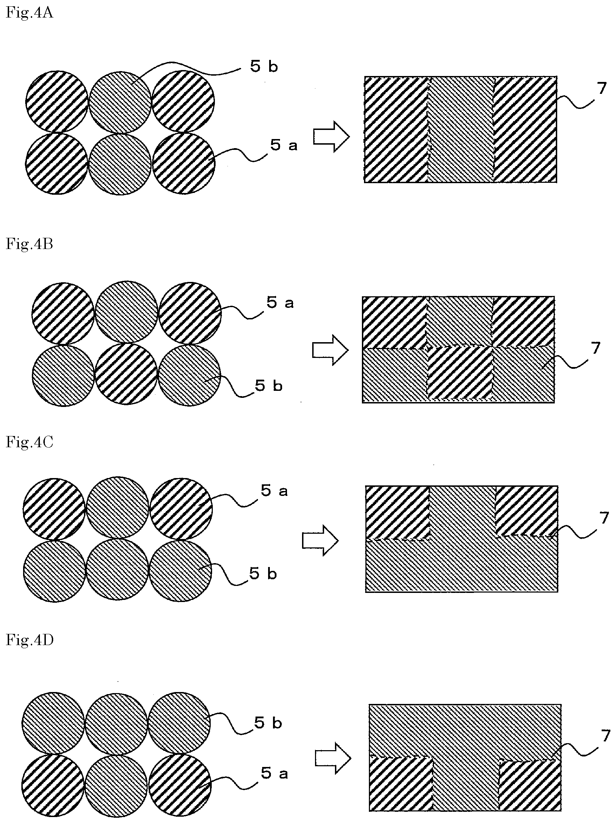

Such a symmetrical arrangement is not limited to the example shown in FIG. 2. For example, in FIGS. 4A to 4D, the left figures show other arrangements of the conductors 5a and 5b, and the right figures shows the conductor joint 7 after welding (the same applies to the following figures). The same is also true when swapping the arrangement of the conductors 5a and 5b, as described above.

FIG. 4A is a diagram showing a state where the conductors 5a are arranged on both sides in the width direction and the conductors 5b are arranged between the conductors 5a. With this configuration, the conductors 5a and 5b may be divided in the left-right direction instead of being gathered in the up-down direction. In this case, four conductors 5a are divided into two. In other words, when viewed from the axial direction of the wire 3, at least one type of wire is not gathered together in one assembly but is instead separated across several different locations.

When creating an assembly of the same type conductors 5a and the same type conductors 5b and the conductors 5a and 5b are arranged so that the conductors 5a and 5b are completely divided into two regions, a region where the conductors that are relatively easy to deform are arranged may deform first, resulting in insufficient bonding of the conductors that are relatively difficult to deform. On the other hand, when at least either of the conductors 5a or 5b is arranged so that the conductors 5a and 5b are divided into multiple regions, variation in bonding can be suppressed. In other words, when arranging two types of the conductors 5a and 5b, bonding strength can be stabilized by arranging the conductors 5a and 5b so that they are divided into three or more regions of conductors 5a and 5b.

Note that, it is more desirable to arrange the wires 3 made up of the conductors 5b that are relatively easy to deform between the wires 3 made up of the conductors 5a that are relatively difficult to deform, without the conductors 5a that are relatively difficult to deform being adjacent to each other. For example, since the conductors 5a that are relatively difficult to deform are less deformable, the surface oxide of the conductors 5a may not be sufficiently destroyed, resulting in variations in bonding strength. On the other hand, by arranging the wires 3 made up of the conductors 5b that are relatively easy to deform between the wires 3 made up of the conductors 5a that are relatively difficult to deform, the bonding length between the conductors 5a can be reduced and the bonding length between the conductors 5a and 5b can be increased compared to when the conductors 5a are gathered into one assembly. Thus, the bonding strength can be stabilized.

As shown in FIG. 4B, it is more effective if all the conductors 5a and 5b are arranged in an alternating arrangement. In other words, when viewed from the axial direction of the wire, when at least one type of wire 3 is separated in the up-down direction of the conductor joint 7 and the same type conductors 5a or the same type conductors 5b are arranged so that they are not arranged being adjacent to each other vertically and horizontally, it is possible to further stabilize bonding strength.

The same effect can be achieved by arranging the conductors 5a with the fewer number of conductors so that they are separated and not adjacent to each other, even when the numbers of conductors 5a and 5b are not equal, as shown in FIG. 4C. In this case, the separated conductors 5a may be arranged on the anvil side instead of the horn side, as shown in FIG. 4D.

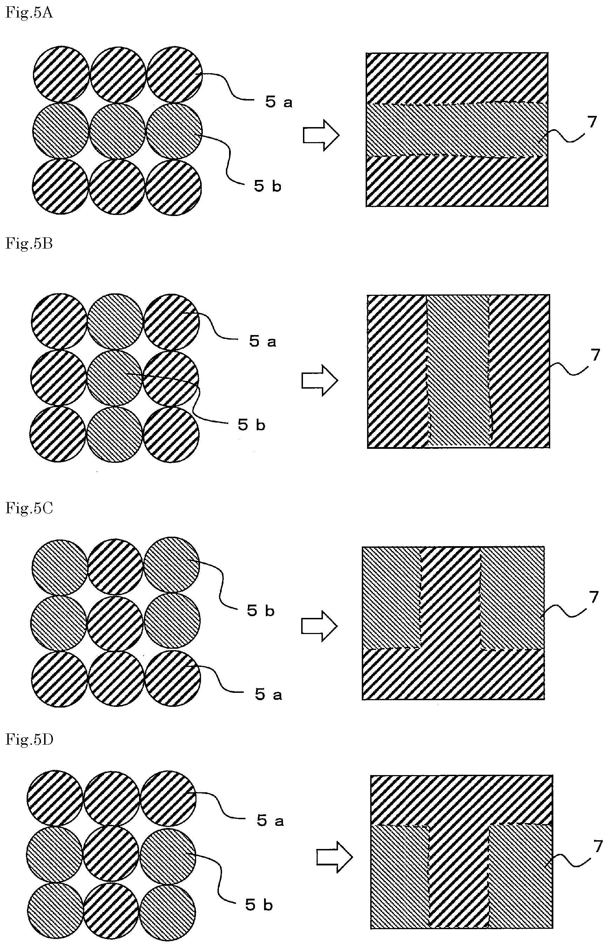

As shown in FIG. 5A, the number of conductors in the up-down direction and the width directions may be the same. In other words, the cross-sectional shape of the conductor joint may be square. Even with this configuration, it is desirable to separate and arrange at least either of the conductors 5a or 5b into multiple regions, rather than gathering the conductors 5a and 5b into the respective assemblies. In this case, the conductors 5a and 5b may be separated vertically, or may be separated left and right, as shown in FIG. 5B.

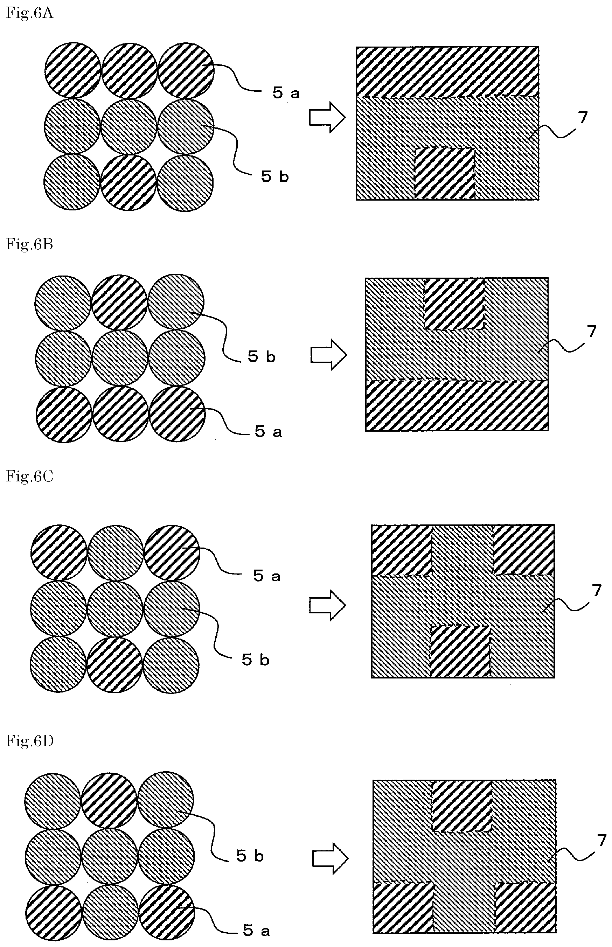

Instead of arranging the conductors 5a and 5b in respective rows, the conductors 5a and 5b may be arranged in a T-shape or an inverted T-shape, as shown in FIGS. 5C and 5D. Further, the conductors 5a and 5b may be separated in different numbers. For example, if separating the conductor 5a into two different parts, part of the conductor 5a may be separated into three and another part of the conductor 5a may be separated into one, as shown in FIGS. 6A and 6B.

As shown in FIGS. 6C and 6D, it is desirable that one conductor 5a is completely separated into individual sections. In this case, arranging the conductors 5b in a row between the conductors 5a, which are separated into a top and a bottom, the conductors 5a and 5b can be securely bonded because the conductors 5a do not line up even in diagonal directions, without the conductors 5a coming into contact with each other during bonding.

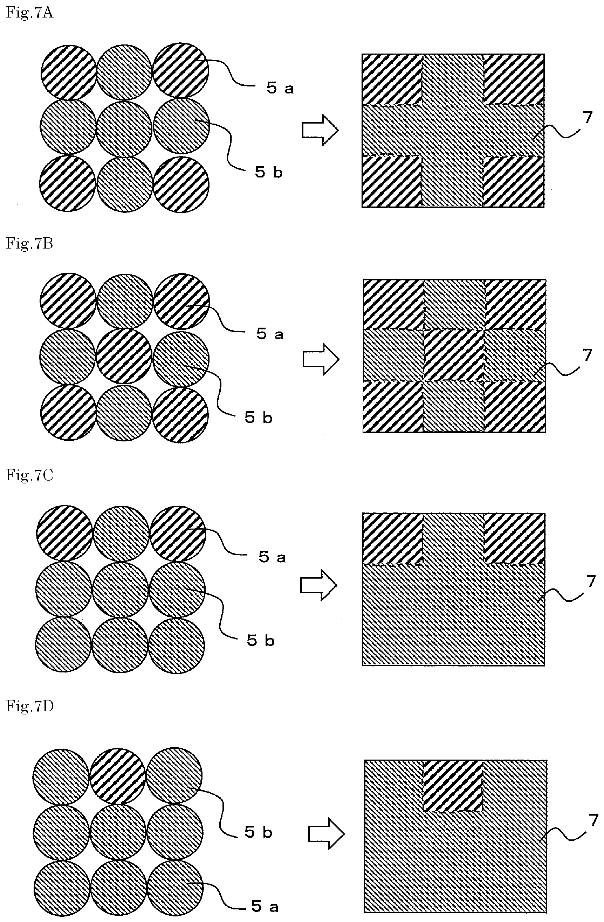

The same effect can be achieved by separating the conductor 5a into places at four corners, as shown in FIG. 7A. Further, as shown in FIG. 7B, if the conductors 5a and 5b are staggered, both the conductors 5a and 5b can be separated into individual sections. As shown in FIGS. 7C and 7D, one conductor 5a (e.g., the conductor that is relatively difficult to deform) may be arranged only at the top row (the horn 11 side) and the conductors 5a may not be adjacent to each other.

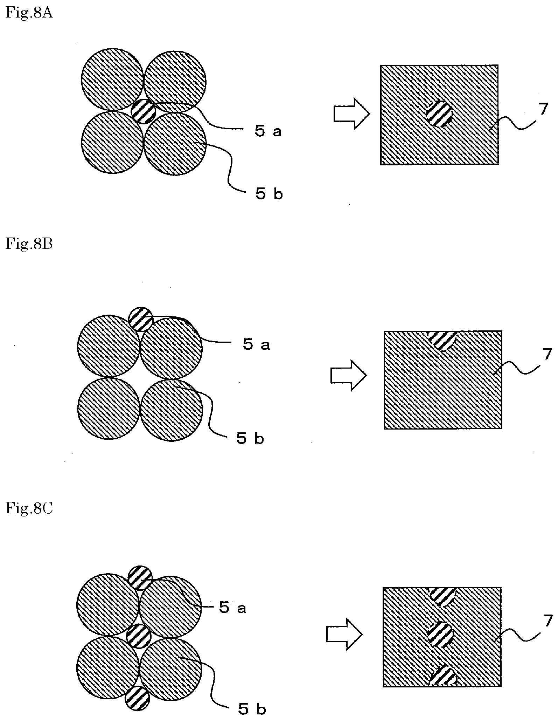

The sizes of the conductors 5a and 5b need not be identical. For example, in the case of the conductor 5a, which has a relatively small size, the conductor 5a may be arranged at the center of the conductors 5b, as shown in FIG. 8A. Alternatively, the conductor 5a may be arranged above the conductor 5b, as shown in FIG. 8B. That is, for example, the conductor 5a that is relatively difficult to deform may be arranged so that it is not exposed at the periphery but covered from all sides by the other conductors 5b, or the conductor 5a may be arranged so that it is exposed on the horn side. If there is more than one conductor 5a, the conductors 5a may be arranged above, below, and at the center of the conductors 5b, as shown in FIG. 8C. In any case, the conductor 5a may be arranged between the conductors 5b in a state where the conductors 5b are aligned.

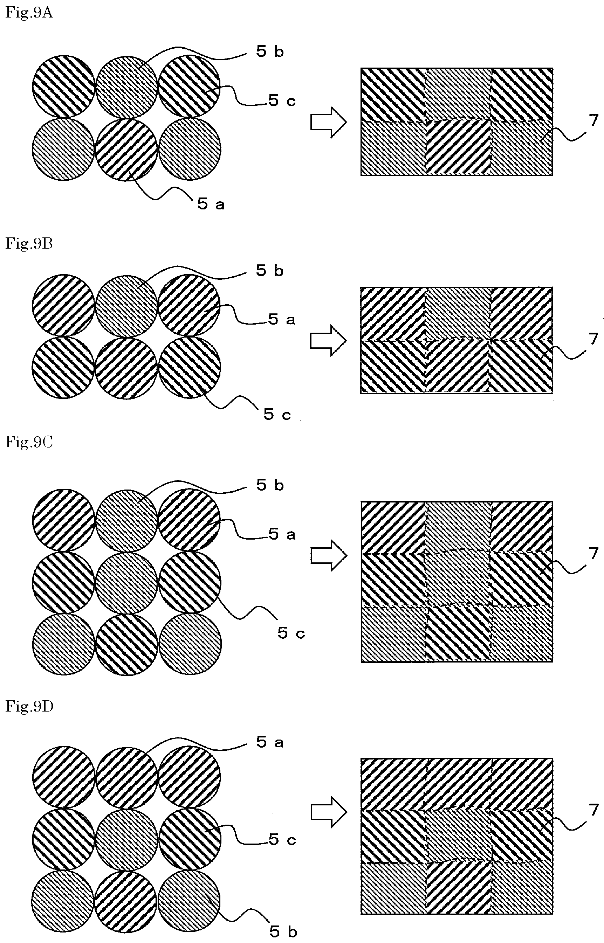

The number and arrangement of the wires are not limited to the examples described above. In the explanation above, an example in which conductors 5a and 5b of two different materials are gathered to form the conductor joint 7 was described, but conductors 5a, 5b, and 5c of three or more different materials may be intermixed, as shown in FIGS. 9A to 9D, for example. In this case, too, high bonding strength can be achieved by arranging conductors of different materials with different ease of deformation so that they are symmetrical with respect to the center line in the width direction (ultrasonic vibration direction). Note that, in this case, it is also desirable to separate the conductors that are most difficult to deform into multiple sections.

It is desirable for two or more types of wires to be intermixed together with respect to the width direction of the conductor joint 7 (the direction in which the wires are sandwiched by the pair of gathers), at least at a portion along the center line with respect to the width direction. For example, when wires of each type are aligned in a row (or multiple rows) over the entire width direction, as shown in FIGS. 2 and 5A, the interfaces between the wires will be linear with respect to the width direction, and the relatively softer material will soften first, which may not guarantee bonding strength at the interface between the different wire types. In particular, when the wire types are aligned parallel to the vibration direction of the horn 11 (i.e., the width direction of the wire joint), vibration especially in the horizontal direction during ultrasonic welding is less conducive to improving bonding strength. Therefore, by arranging each wire so that multiple wire types are intermixed in the width direction at least for a portion along the up-down direction of the conductor joint 7, bonding strength at the interface between the different wire types can be ensured.

### Examples

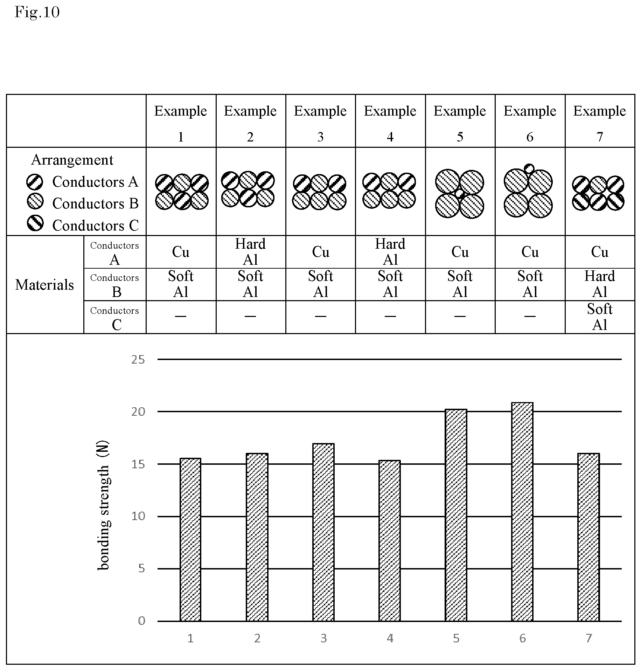

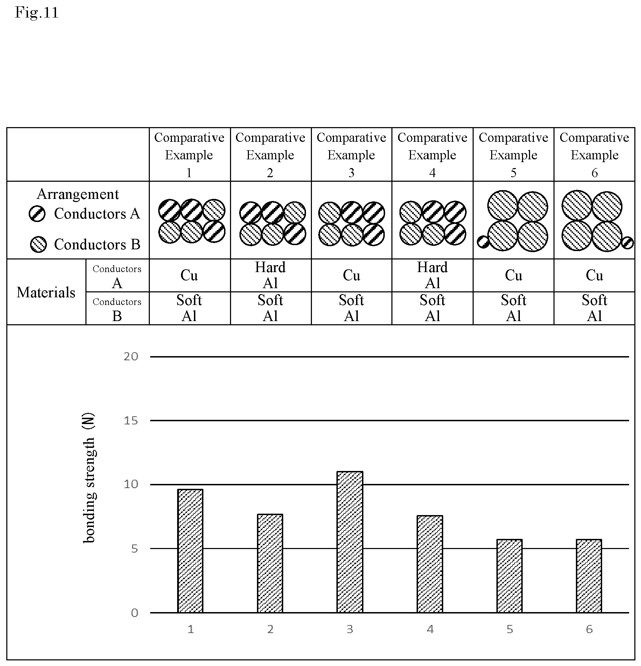

The arrangement of the conductors was changed, and the bonding strength was evaluated. The conductors were arranged in each arrangement and ultrasonic bonding was performed in a range of 10 mm in length. With the wires fixed to the bonded structure, one of the wires was pulled in a 180-degree direction at 100 mm/min, and the maximum load at which the conductor joint was torn was defined as the bonding strength. The results are shown in FIGS. 10 and 11.

The copper wires in Examples 1 and 3 and Comparative Examples 1, 3, and 7 in the figures are tough pitch copper wires with a nominal cross-sectional area of 0.35 sq. The copper wires with smaller diameters in Examples 4 and 5 and Comparative Examples 4 and 5 are Cu alloy wires with Sn 0.7 mass% with a nominal cross-sectional area of 0.13 sq. The soft aluminum wire is an aluminum alloy (A1070) wire with a nominal cross-sectional area of 0.75 sq, and the hard aluminum wire is an A6061 aluminum alloy wire with a nominal cross section of 0.5 sq.

As shown in FIGS. 10 and 11, Examples 1 to 7, in which the conductors are arranged symmetrically in the width direction, achieved higher bonding strength than Comparative Examples 1 to 6, in which the conductors are arranged asymmetrically. Although a detailed description will not be provided, in FIG. 2 and FIGS. 4 to 9, higher bonding strength was achieved compared to the Comparative Examples, particularly by separating and arranging one type of conductors A (harder conductor) so that they are not adjacent to each other in the up-down and left-right directions, as in Examples 1 to 6.

Embodiments have been described above with reference to the accompanying figures, but the technical scope of the present invention is not affected by the above-described embodiments. It will be clear to a person skilled in the art to conceive of various changes or modifications within the scope of the technical concept described in the claims, which are naturally understood to be within the technical scope of the present invention.

For example, relatively hard conductors or relatively soft conductors may be arranged in at least a portion of a joint portion of the mold (between the anvil 15 and the gather 17, and between the horn 11 and the gather 17).

### Reference Signs List

1 Bonded structure
3 Wire
5, 5a, 5b, 5c Conductor
7 Conductor joint
9 Ultrasonic bonding device
11 Horn
15 Anvil
17 Gather

## Claims

1. A conductor-bonded structure in which conductors of a plurality of wires are ultrasonically bonded, wherein
two or more types of the wires made up of conductors of different materials are intermixed;
when viewed from an axial direction of the wire, an ultrasonic bonding direction is an up-down direction of a conductor joint, and a direction orthogonal to the ultrasonic bonding direction is a width direction of the conductor joint;
the wires made of different materials are arranged substantially line symmetrical with respect to a center line in the width direction; and
the two or more types of the wires are intermixed in the width direction of the conductor joint, at least at a portion along the center line.

2. The conductor-bonded structure according to claim 1, wherein
when viewed from the axial direction of the wire, at least one type of the wires is separated across several different locations.

3. The conductor-bonded structure according to claim 2, wherein
when viewed from the axial direction of the wire, at least one type of the wires is separated in the up-down direction of the conductor joint.

4. The conductor-bonded structure according to claim 2 or 3, wherein
of the wires, a wire made up of conductors that are relatively easy to deform is arranged between wires made up of conductors that are relatively difficult to deform.

5. The conductor-bonded structure according to claim 4, wherein
the conductor that is relatively difficult to deform is a conductor containing copper as a main component, and the conductor that is relatively easy to deform is a conductor containing aluminum as a main component.

6. The conductor-bonded structure according to claim 4, wherein
the conductor that is relatively difficult to deform is a conductor containing relatively hard aluminum as a main component, and the conductor that is relatively easy to deform is a conductor containing relatively soft aluminum as a main component.

7. The conductor-bonded structure according to claim 1, wherein
when viewed from the axial direction of the wire, one type of the wires is arranged at the center in the width direction.

8. A method for ultrasonically bonding conductors of a plurality of wires together, the method using an anvil, a horn arranged opposing the anvil, and a pair of gathers opposing each other in a direction orthogonal to the direction in which the anvil and the horn oppose each other, the method comprising:
sandwiching an assembly formed by gathering a plurality of the conductors between the anvil, the horn, and the gathers, wherein
when applying vibration to the assembly in a direction substantially perpendicular to an axial direction of the wire while applying pressure, when viewed from the axial direction of the wire, the wires made of different materials are arranged substantially line symmetrical with respect to a center line in a vibration direction, and two or more types of the wires are intermixed in a direction in which the assembly is sandwiched by the pair of gathers, at least at a portion along the center line.
